# EUROPÄISCHE PATENTANMELDUNG

(11) **EP 4 428 778 A1**
(43) Veröffentlichungstag der Anmeldung: **11.09.2024**
(21) Anmeldenummer: 23160664.1
(22) Anmeldetag: 08.03.2023
(51) Int. Cl.: G06Q 10/047, G06Q 10/0631, G06Q 50/26

(54) **PERSONENSTROMSIMULATION MIT REALDATEN FÜR EINE ECHTZEITAPPLIKATION**

(71) Anmelder: Siemens Schweiz AG, 8047 Zürich (CH)
(72) Erfinder: Mayer, Hermann Georg, 83209 Prien am Chiemsee (DE); Baier, Georg, 81241 München (DE); Klein, Wolfram, 85579 Neubiberg (DE)
(74) Vertreter: Siemens Patent Attorneys

(57) **Zusammenfassung**

Die Erfindung betrifft ein Verfahren zur Simulation von Personenströmen in einem Gebiet (AREA), bei dem Ergebnisse mehrerer für das Gebiet (AREA) durchgeführter Personenstromsimulationen vorliegen, wobei jedes Ergebnis eine Verteilung von Personen innerhalb des Gebietes (AREA) für mehrere Zeitpunkte angibt. Für eine Echtzeitanwendung werden in zumindest einem Teil (MK) des Gebietes (AREA) mittels mindestens eines Sensors Personeninformationen erfasst. Unter Verwendung der Personeninformationen wird eines der vorliegenden Ergebnisse als am besten den erfassten Personeninformationen entsprechend ermittelt. Dieses ermittelte Ergebnis wird als Simulationsergebnis für das Gebiet (AREA) verwendet. Weiterhin betrifft die Erfindung hierzu korrespondierend eine Vorrichtung oder ein System zur Datenverarbeitung, ein Computerprogramm, einen computerlesbaren Datenträger, sowie ein Übertragungssignal.

## Beschreibung

Die Erfindung betrifft ein Verfahren zur Simulation von Personenströmen in einem Gebiet.

Eine Personenstromsimulation ist eine Computersimulation, bei der die Bewegungen von Personen auf der Grundlage eines mathematischen Modells simuliert werden. Vereinfacht ausgedrückt imitieren Personenstromsimulationen das Verhalten einer großen Anzahl von Menschen im räumlichen Gebieten. Hierzu berechnet die Simulation die zeitlich und räumlich gesehen nächste Position einer Person anhand von bestimmten Vorschriften oder maschinengelerntem Vorgehen, wodurch ein menschliches Verhaltensmuster nachgeahmt werden soll. Hierzu können verschiedene Modelle aus dem Bereich der Mikro- bzw. Makromodellierung zum Einsatz kommen. Der Einsatzzweck dieser Simulationen ist vielfältig, ein prominentes Beispiel ist die Berechnung von Evakuierungssituationen.

Ein besonders interessanter Einsatz von Personenstromsimulationen sind Echtzeitanwendungen. Hierbei soll das Ergebnis der Simulation ermöglichen, die Personenströme im betrachteten Gebiet zu lenken, womit z.B. ungünstige von der Simulation prognostizierte Szenarien verhindert oder abgemildert werden können. Echtzeit impliziert, dass während einem realen Geschehen durch die Simulation vom aktuellen Zeitpunkt aus in der Zukunft liegende Zustände vorhergesagt werden, so dass diese zukünftigen Zustände durch geeignete Eingriffe beeinflusst werden können.

Der Erfindung liegt die Aufgabe zugrunde, ein Verfahren zur Simulation von Personenströmen in einem Gebiet aufzuzeigen, welches sich insbesondere für Echtzeitanwendungen eignet.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechendes computerlesbares, vorzugsweise nichtflüchtiges, Speichermedium, und ein entsprechendes Übertragungssignal. Vorteilhafte Ausgestaltungen und Weiterbildungen sind Gegenstand von Unteransprüchen.

Bei dem Verfahren zur Simulation von Personenströmen in einem Gebiet liegen Ergebnisse mehrerer für das Gebiet durchgeführter Personenstromsimulationen vor. Hierbei gibt jedes Ergebnis eine Verteilung von Personen innerhalb des Gebietes für mehrere Zeitpunkte an. Für eine Echtzeitanwendung werden in zumindest einem Teil des Gebietes mittels mindestens eines Sensors Personeninformationen erfasst. Unter Verwendung der Personeninformationen wird eines der vorliegenden Ergebnisse als am besten den erfassten Personeninformationen entsprechend ermittelt, und dieses ermittelte Ergebnis wird als Simulationsergebnis für das Gebiet verwendet.

Bevor das Verfahren ablaufen kann, wurden bereits mehrere Personenstromsimulationen berechnet. Deren Ergebnisse werden gespeichert und stehen für das Verfahren zur Verfügung. Das Ergebnis einer Personenstromsimulation zeigt vom Beginn der Simulation, dem Startzeitpunkt, bis zu einem bestimmten Endzeitpunkt, an welchen Orten innerhalb eines der Simulation zugrunde liegenden Gebietes sich Personen befinden. Zeigt man dieses Ergebnis für mehrere aufeinanderfolgende Zeitpunkte an, kann man dementsprechend die von der Simulation berechnete Bewegung der Personen betrachten.

Das Verfahren soll für eine Echtzeitanwendung einsetzbar sein. Daraus folgt einerseits, dass angestrebt wird, möglichst schnell das Ergebnis einer Personenstromsimulation bezogen auf das aktuell vorliegende Szenario verfügbar zu haben. Andererseits folgt hieraus auch, dass Informationen benötigt werden, welche das aktuelle Szenario hinsichtlich der für die Personenstromsimulation einschlägigen Parameter beschreiben. Hierzu werden Personeninformationen durch Messungen erfasst. Diese Messungen können in einem oder mehreren abgegrenzte Teilen des Gebietes, auf das sich die Personenstromsimulation beziehen soll, stattfinden, oder auch in dem gesamten Gebiet. Mit den Personeninformationen liegen somit Realdaten vor, welche den Zustand angeben, der dem Startzeitpunkt einer für die Echtzeitanwendung gewünschten Personenstromsimulation entspricht.

Da angestrebt wird, möglichst schnell ein zu den Realdaten passendes Ergebnis einer Personenstromsimulation vorliegen zu haben, kann - zumindest vorläufig - auf die bereits vorliegenden Ergebnisse zugegriffen werden. Da bereits mehrere Personenstromsimulationen für das Gebiet durchgeführt wurden, kann eines dieser Ergebnisse herausgesucht und verwendet werden. Diese Auswahl erfolgt unter Verwendung der Personeninformationen, denn diese beschreiben das Szenario, welches simuliert werden soll. Aus den mehreren vorliegenden Ergebnissen wird daher ermittelt, welches der zugehörigen Personenstromsimulationen am besten den erfassten Personeninformationen entspricht. Dieses beste Ergebnis kann dann als für die Echtzeitanwendung zu verwendende Ergebnis einer Personenstromsimulation des aktuellen Szenarios zum Einsatz kommen. Dies erlaubt ein rasches und effizientes Durchführen von realen Maßnahmen in dem aktuellen Szenario. Denn mit dem Zur-Verfügung-Stehen der Realdaten muss nicht eine Personenstromsimulation erst gestartet werden, vielmehr kann eine geeignete bereits durchgeführte Personenstromsimulation verwendet werden; es ist lediglich das am besten passende Ergebnis aus mehreren zuvor durchgeführten Personenstromsimulationen herauszusuchen.

Besonders eignet es sich, wenn bei den durchgeführten Personenstromsimulationen verschiedene Anzahlen an in dem Gebiet befindlichen Personen zugrunde gelegt wurden. Bei der Ermittlung des besten Ergebnisses dieser bereits zuvor durchgeführten Personenstromsimulationen können dementsprechend die aus den Realdaten hervorgehenden Personenanzahlen mit denjenigen verglichen werden, welche den Personenstromsimulationen zugrunde gelegt wurden. Außer dem Parameter der Personenanzahl können auch weitere Parameter variiert und hierfür Personenstromsimulationen für das Gebiet durchgeführt werden, wie z.B. Personengeschwindigkeiten.

Die Personeninformationen können umfassen:
eine Anzahl von Personen in dem zumindest einen Teil des Gebietes; die alleinige Verwendung von Personenanzahlen erlaubt die Verwendung einfacher und vielfach ohnehin installierter Sensorik;
   und/oder
Ortsangaben von Personen in dem zumindest einen Teil des Gebietes; dies erfordert eine genauere Erfassung von Personen z.B. mittels eines Kamerabildes, hat jedoch den Vorteil, dass hierdurch das Szenario genauer beschrieben wird als bei der bloßen Personenanzahl, weshalb auch das Ergebnis einer Personenstromsimulation die zukünftigen Personenströme besser vorhersagen kann;
   und/oder
Bewegungsgeschwindigkeiten und/oder -richtungen von Personen in dem zumindest einen Teil des Gebietes; hierfür ist eine noch genauere Sensorik erforderlich, z.B. in Form von Videoaufnahmen, welche einen zeitlichen Verlauf von Ortsangaben von Personen aufzeichnen.

Als Sensoren zur Erfassung der Personeninformationen eignen sich Kameras, Smartphone Applikationen und Personenzähleinrichtungen wie z.B. Drehkreuze. Die Art der erfassten Personeninformationen hängt davon ab, welche Messungen die verfügbaren Sensoren ermöglichen.

Zur Ermittlung des am besten entsprechenden Ergebnisses kann ein Distanzmaß zwischen Datensätzen aus den Ergebnissen und den Personeninformationen berechnet werden. Die Berechnung eines Distanzmaßes ist hierbei eine mathematische Operation, welche eine Aussage über die Nähe oder Entfernung zwischen jeweils zwei Datensätzen ermöglicht. Ein kleines Distanzmaß zeigt dementsprechend an, dass zwei Datensätze sich ähnlich sind. Jeder Datensatz ist hierbei vorzugsweise das Ergebnis einer der durchgeführten Personenstromsimulationen für einen bestimmten Zeitpunkt. Diese Momentaufnahme wird mit den Personeninformationen verglichen, um das Distanzmaß zu berechnen. Mit dem Distanzmaß können auch mehr als zwei Datensätze verglichen werden, auf diese Weise kann eine Mehrzahl von Datensätzen aus den Ergebnissen mit der gleichen Mehrzahl an Datensätzen aus den Personeninformationen verglichen werden.

Unter Verwendung der Personeninformationen kann nicht nur eines der vorliegenden Ergebnisse ermittelt werden, sondern auch ein Zeitpunkt, und dieses ermittelte Ergebnis wird derart als Simulationsergebnis für das Gebiet verwendet, dass der ermittelte Zeitpunkt der Startzeitunkt der Simulation und der der Erfassung der Personeninformationen entsprechende Zeitpunkt ist. Bei der Suche nach der besten der vorliegenden Personenstromsimulationen ergibt sich also sowohl das beste Ergebnis als auch ein bestimmter Zeitpunkt innerhalb des besten Ergebnisses. Dieser Zeitpunkt wird als Startpunkt für die Personenstromsimulationen angesehen. Bezogen auf das reale Szenario ist dies der Zeitpunkt, zu welchem die Personeninformationen erfasst wurden.

Unter Verwendung der Personeninformationen kann eine weitere Personenstromsimulation gestartet werden, und nach Beendigung dieser Personenstromsimulationsberechnung wird das hierzu gehörige Ergebnis anstelle des zuvor ermittelten Ergebnisses als Simulationsergebnis für das Gebiet verwendet. Es kann also zunächst, solange die neu gestartete Personenstromsimulation noch nicht abgeschlossen ist, das beste Ergebnis aus den zuvor durchgeführten Personenstromsimulationen verwendet werden, und sobald die Berechnung der neuen Personenstromsimulation abgeschlossen ist, kann dieses Ergebnis herangezogen werden. Dieses sollte die Realität besser vorhersagen als die zuvor berechnete Personenstromsimulation, da es unter Verwendung der tatsächlich gemessenen Personeninformationen berechnet werden kann, während die zuvor berechneten Personenstromsimulationen eventuell auf Parameterwerten basieren, die vom realen, durch die Personeninformationen repräsentierten, Szenario abweichen.

Wenn zu einem späteren Zeitpunkt erneut Personeninformationen erfasst werden, kann unter Verwendung der neuen Personeninformationen eines der vorliegenden Ergebnisse als am besten den neuen Personeninformationen entsprechend ermittelt werden, dieses ermittelte Ergebnis als Simulationsergebnis für das Gebiet verwendet werden, und unter Verwendung der neuen Personeninformationen eine weitere Personenstromsimulation gestartet wird. Das Zur-Verfügung-Stehen von neuen Realdaten bewirkt in diesem Fall einen Neustart des Verfahrens, so dass aktualisierte Simulationsergebnisse bereitgestellt werden können.

Vorzugsweise wird bei der Echtzeitanwendung basierend auf der Verwendung als Simulationsergebnis für das Gebiet eine Maßnahme zur Lenkung von Personenströmen in dem Gebiet durchgeführt. Das Simulationsergebnis wirkt sich also direkt auf die physische Realität aus, wo lenkend eingegriffen werden kann.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Es kann beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Es kann auch zumindest teilweise in einer Cloud und/oder in einer Edge-Computing-Umgebung ausgeführt werden. Für den computergestützten Ablauf kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten.

Da dies funktional gleichbedeutend ist, wird vorliegend im Singular "das Computergrogramm" und "der Computer" formuliert.

Im Folgenden wird die Erfindung anhand eines Ausführungsbeispiels näher erläutert. Dabei zeigen:
Figur 1A: eine erste Momentaufnahme des Ergebnisses einer Personenstromsimulation,
Figur 1B: eine zweite Momentaufnahme des Ergebnisses einer Personenstromsimulation,
Figur 2: den Einsatz einer Personenstromsimulation bei einer Echtzeitanwendung,
Figur 3: ein Ablaufdiagramm,
Figur 4: ein zur Durchführung des Verfahrens geeignetes Computersystem,
Figur 5: eine detailliertere Darstellung eines Systems nach Figur 4.

Ein Personenstromsimulationsmodell modelliert die Bewegungen von Menschen in räumlichen Umgebungen. Typische hierbei betrachtete Gebiete sind z.B. Bahnhöfe, Flughäfen, Sportstadien. Durch Ablaufenlassen der Simulation können verschiedene Szenarien betrachtet werden, wie z.B. Evakuierungen von Bürogebäuden oder Hotels im Brandfall, das zeitgleiche Eintreffen einer Vielzahl von Personen in einem begrenzten Gebiet wie z.B. zu Beginn eines Sportereignisses in einem Stadion, oder auch die Auswirkungen von Designänderungen innerhalb von Gebäuden oder öffentlichen Räumen auf Aspekte wie Sicherheit oder Effizienz des Personenverkehrs.

Interessant ist dabei insbesondere eine mikroskopische Simulation, die die Bewegung einzelner Personen abbildet. Die Simulation startet hierbei in einem Zustand, in welcher eine bestimmte Anzahl von Personen sich an bestimmten Startorten innerhalb des betrachteten Gebietes befinden und von dort aus ihre Bewegung beginnen, oder auch eine bestimmte Verteilung von Personen innerhalb des Gebietes vorliegt. Hierbei können die Startorte eines oder mehrere Bereiche innerhalb des Gebietes sein, wie z.B. Ein- oder Ausgänge. Dem Personenstromsimulationsmodell werden personenbezogene Parameter vorgegeben, welche die Bewegung einzelner Personen bestimmen. Bei diesen Parametern kann es sich um die angestrebte Geschwindigkeit handeln, sowie um bevorzugte und minimale Abstände zu anderen Personen. Ferner werden einer oder mehrere Zielorte vorgegeben, welche die Personen erreichen möchten. Das Ergebnis der Personenstromsimulation ist der zeitliche Verlauf der Verteilung der Personen in dem betrachteten Gebiet; d.h. für die in der Zukunft nach dem Start der Simulation liegenden Zeitpunkte prognostiziert das Personenstromsimulationsmodell, an welchen Orten innerhalb des Gebietes sich eine Person befindet.

Ein Nachteil dieser Technologie der mikroskopischen Simulation ist der hohe Zeitaufwand, der mit der Berechnung der Simulationsergebnisse verbunden ist. So dauert z.B. die Simulation einer Evakuierung eines Fußballstadions mit 60.000 Personen derzeit auf einem durchschnittlichen Notebook eine bis mehrere Stunden. Die fortschreitende Computer- und Cloud-Technik wird die Performance zwar zukünftig verbessern - von Echtzeitanwendungen ist man aber immer noch weit entfernt. Von einer solchen Echtzeitanwendungen erwartet man, dass "auf Knopfdruck", d.h. annähernd instantan nach Start der Simulation, das Ergebnis der Simulation zur Verfügung steht, so dass hierauf reagiert werden kann.

Im Folgenden wird eine Umgebung betrachtet, in welcher aktuelle Sensordaten zur Erfassung von Personen, z.B. aufgenommen von Kameras, zur Verfügung stehen. Insbesondere hierfür ist der Wunsch nach einer Echtzeitanwendung der Simulation groß, womit basierend auf den aktuellen Sensordaten die Bewegungen von Personen ohne großen Zeitaufwand in die Zukunft interpoliert werden könnten, um rechtzeitig Aktionen durchzuführen. Derartige Aktionen könnten z.B. das Umleiten von Personen auf andere Fluchtwege sein. Bisher werden, um diese Reaktion auf das Eintreffen aktueller Sensordaten zu ermöglichen, alle Personen mit ihren zugehörigen Orten, welche mit den Sensoren erfasst wurden, in das Simulationsmodell als Startzustand übertragen und ein neuer Simulationslauf wird gestartet. Simulationsergebnisse, die in weiterer Zukunft liegen, z.B. die Situation in 10 Minuten nach dem aktuellen Zustand, welcher dem Start der Simulation entspricht, stehen üblicherweise erst in einigen Minuten zur Verfügung. Dies ist zu spät für eine reaktive Echtzeitanwendung.

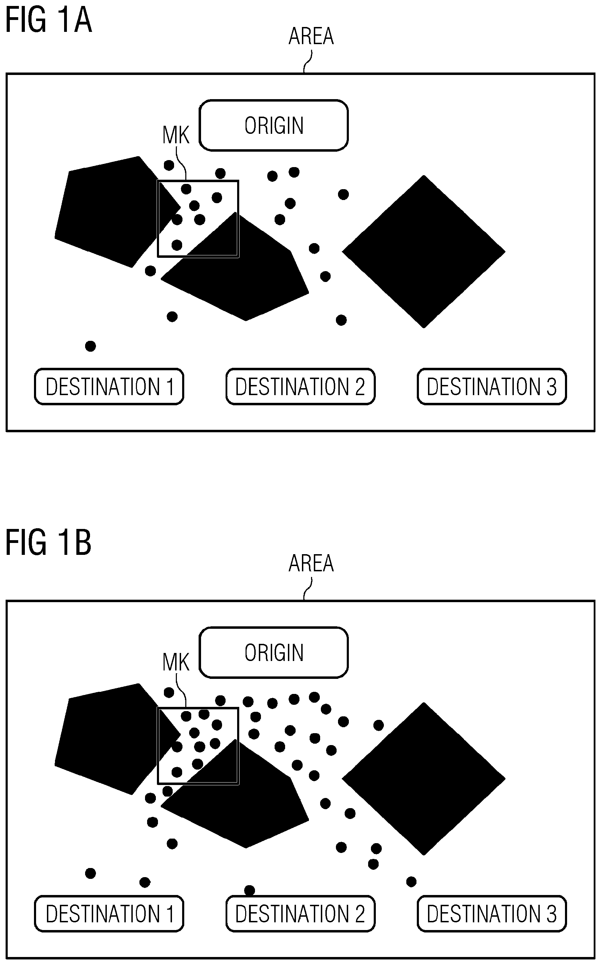

Die Grundidee der im Folgenden beschriebenen Vorgehensweise ist, auf vorsimulierte Ergebnisse zugreifen zu können, um Simulationsergebnisse für Echtzeitanwendungen rechtzeitig bereitstellen zu können. Hierzu werden im Vorfeld mehrere Personenstromsimulationen durchgeführt und deren Ergebnisse gespeichert. Figur 1A zeigt eine erste Momentaufnahme des Ergebnisses einer solchen Personenstromsimulation. Es wird das Gebiet AREA betrachtet, innerhalb dessen sich der Startbereich ORIGIN und die Zielbereiche DESTINATION 1, DESTINATION 2 und DESTINATION 3 befinden. Zum Start der Simulation befinden sich eine bestimmte Anzahl von Personen im Startbereich ORIGIN, wobei jede der Personen eine Bewegung zu einem der Zielbereiche DESTINATION 1, DESTINATION 2 und DESTINATION 3 durchführen soll. Bei den schwarz eingefärbten Polygonen handelt es sich um Objekte oder Hindernisse, welche die Personen nicht betreten können. Die für Personen nutzbaren Wege sind dementsprechend die Bereiche zwischen diesen Polygonen. Diese in der Figur dargestellte Umgebung kann z.B. der Ausgang eines Fußballstadions als Startbereich ORIGIN, sowie Haltestellen öffentlicher Verkehrsmittel als Zielbereiche DESTINATION 1, DESTINATION 2 und DESTINATION 3 sein.

Das Ergebnis der Personenstromsimulation ist der zeitliche Verlauf der Verteilung der Personen innerhalb des Gebietes AREA. Zu einem bestimmten Zeitpunkt nach Start der Simulation kann eine solche Verteilung z.B. wie in Figur 1A gezeigt aussehen, wobei die dicken Punkte jeweils für einzelne Personen stehen. Der Übersichtlichkeit halber wurden nur wenige Personen eingezeichnet, in tatsächlichen Simulationen ist die Personenanzahl deutlich größer.

Es sollen also mehrere Personenstromsimulationen ablaufen und deren Ergebnisse gespeichert werden, diese werden im Folgenden als Vorsimulationen bezeichnet. Hierbei soll versucht werden, die Vorgaben und Parameter der Vorsimulationen möglichst gut an in Zukunft tatsächlich eintretende Szenarien anzupassen, d.h. erwartete Szenarien mittels der Vorsimulationen vorwegzunehmen. Dabei wird ausgenutzt, dass die Anzahl der Personen und ihre Ziele für viele relevante Szenarien, z.B. das Ende eines Fußballspiels oder eines Konzerts, oder auch ein Volksfest, im Vorfeld gut abgeschätzt werden kann, z.B. anhand von Ticket-Verkäufen oder Erfahrungen aus der Vergangenheit. Auch die Personengeschwindigkeiten oder deren Ziele können sich aufgrund verschiedener Umstände ableiten lassen, hängen also oft von vorhersehbaren Umständen ab, wie z.B. Tageszeit, Witterung.

Es werden daher für Parameter, von denen man ausgehen kann, dass sie in typischen realen Szenarien Werte in einem bestimmten Bereich annehmen können, vorab verschiedene Simulationsläufe durchgeführt. Werden z.B. für eine Veranstaltung n Personen erwartet, so können Simulationen mit 0.9 * n , 0.95 * n, n, 1.05 * n und 1.1 * n durchgeführt werden. Je nach Bedarf lässt sich die Abstufung verfeinern oder vergröbern. Die entsprechenden Simulationsergebnisse werden jeweils gespeichert. Die Anzahl an durchgeführten und dementsprechend zu speichernden Vorsimulationen hängt insbesondere von der verfügbaren Speicherkapazität ab. Figur 1A zeigt beispielhaft die Verteilung von Personen gemäß dem Ergebnis einer ersten Vorsimulation zu einem bestimmten Zeitpunkt nach Simulationsstart, während Figur 1B diese Verteilung zum gleichen Zeitpunkt nach Simulationsstart zeigt, jedoch wurde die Vorsimulation der Figur 1B mit einer größeren Personenanzahl gestartet.

Innerhalb des Gebietes AREA wird eine Messkachel MK definiert; diese hat in den Figuren 1A und 1B die Form eines Quadrates, sie kann aber auch abweichende Umrandungen aufweisen. In der Realität, d.h. innerhalb des realen Szenarios, für welches die Personenstromsimulation angewendet werden soll, werden die Personen innerhalb der Messkachel MK mit einem oder mehreren Sensoren erfasst. Geeignete Sensoren sind insbesondere Kameras. Diese erlauben, für alle Personen innerhalb der Kachel den Aufenthaltsort zu bestimmen, sowie ferner durch Auswertung zeitlich benachbarter Kamerabilder auch jeweils die Geschwindigkeit und die Laufrichtung. Eine alternative Möglichkeit zur Erfassung von Personenorten und - geschwindigkeiten ist die Verwendung von Applikationen auf Smartphones, die Geodaten des Smartphones melden. Einfachere Technologien zur Erfassung von Personen messen lediglich die aktuelle Anzahl von Personen in einem kleinen Gebiet, wie z.B. Drehkreuze o.ä. an einem Einlass oder Ticketschalter, oder ein Tripwire, welches das Überschreiten einer Linie durch Personen erkennt. Die durch die Sensoren erfassten Informationen umfassen somit zumindest eine Anzahl von Personen in einem der Messkachel MK entsprechenden Bereich, wie z.B. den Bereich um eine Sensoreinrichtung zur Erfassung oder Zählung von Personen, sowie gegebenenfalls weitere Informationen wie Aufenthaltsorte, Bewegungsrichtungsgeschwindigkeit, Bewegungsrichtung. Diese Informationen werden als Personeninformationen bezeichnet. Die Größe, Form und Anordnung der Messkachel MK ist so gewählt, dass innerhalb der Messkachel MK möglichst gut und viele Personen durch Sensorik erfasst werden können. Oftmals bietet es sich an, die Messkachel MK in der Nähe eines Start- oder Zielgebietes zu platzieren. Es kann auch eine Mehrzahl von Messkacheln MK zum Einsatz kommen.

Die in der Realität erfassten Personeninformationen werden nun mit den Ergebnissen der Vorsimulationen innerhalb der Messkachel MK verglichen. Die Komplexität des Vergleichs hängt davon ab, welche Art von Daten die Personeninformationen beinhalten: ist dies nur die Personenanzahl innerhalb des realen der Messkachel MK entsprechenden Gebietes, so wird mit der Personenanzahl in der Messkachel MK in den Ergebnissen der Vorsimulationen verglichen; enthalten die Personeninformationen mehrere Arten von Daten, so werden auch diese zum Vergleich herangezogen.

Für den Vergleich können an sich bekannte mathematische Algorithmen zum Einsatz kommen, welche ein Distanz- oder Abstandsmaß zwischen zwei Datensätzen berechnen. Hierbei können für das Distanzmaß der Kachelvergleiche unterschiedliche Datenarten gewichtet einfließen, z.B. ob eher der Abstand der Personen eine Rolle spielt, oder ihre Bewegungsgeschwindigkeit. Optional kann das Distanzmaß auch über mehrere aufeinander folgende Zeitpunkte hinweg berechnet werden. Hierzu wird in den Ergebnissen der Vorsimulationen die Messkachel MK zu mehreren Zeitpunkten betrachtet und diese mit entsprechenden zeitlich nacheinander erfolgten Erfassungen der Personeninformationen verglichen.

Es soll derjenige Datensatz der Vorsimulationen ermittelt werden, für den der geringste Wert basierend auf dem gewählten Distanzmaß bestimmt wird. Dieser beste Datensatz ist hierbei das Ergebnis einer der mehreren gespeicherten Vorsimulation zu einem bestimmten Zeitpunkt, bzw. zu einer Reihe aufeinanderfolgender Zeitpunkte, falls das Distanzmaß wie oben beschrieben über mehrere Zeitpunkte bestimmt wurde. Das Auffinden des besten Datensatzes beinhaltet also einerseits eine Auswahl von einer aus mehreren gespeicherten Vorsimulationen, und andererseits eines Zeitpunktes. Hierbei wird beim Aufsuchen des besten Datensatzes nicht in dieser Reihenfolge vorgegangen, vielmehr ergibt sich beides automatisch aus dem Vergleich der Ergebnisse der Vorsimulationen mit den Realdaten. Für beides können gegebenenfalls aus dem realen Szenario zur Verfügung stehende Informationen genutzt werden. In Bezug auf die mehreren Vorsimulationen können bekannte Besucherzahlen oder Wetterbedingungen hilfreich sein, so dass manche der gespeicherten Vorsimulationen irrelevant sein könnten und nicht nach dem besten Datensatz durchsucht bzw. mit den Personeninformationen verglichen werden müssen.

In Bezug auf den Zeitpunkt werden die Ergebnisse der Vorsimulationen systematisch für jeden berechneten Zeitpunkt betrachtet und mit den Personeninformationen in der Messkachel MK verglichen. Um den Rechenaufwand hierfür zu reduzieren, kann hierbei in der Zeit in bestimmten Schritten gesprungen werden, z.B. kann zum Vergleichen mit der Realität das Ergebnis der Vorsimulationen z.B. in 10 Sekunden Schritten durchlaufen werden. Bezieht sich die Simulation jedoch auf ein bestimmtes feststellbares Ereignis wie z.B. das Ende eines Fußballspiels, so reicht i.d.R. ein engmaschiges Testen um diesen festgestellten Zeitpunkt herum. So könnte z.B. für einige Minuten um den Zeitpunkt "20 Minuten nach Abpfiff" in 10 Sekunden Schritten verglichen werden. Je besser sich der Zeitpunkt in den Ergebnissen der Vorsimulationen relativ zur Erfassung der Realdaten eingrenzen lässt, desto schneller lässt sich der beste Datensatz auffinden. Dies ist z.B. wie beschrieben bei Veranstaltungen mit fest geplantem Ende der Fall. Da solche Veranstaltungen häufig mit großen Personenmengen einhergehen, ist das Vorgehen hierfür besonders effizient. Es gibt auch Szenarien, bei welchen der Ablauf der Personenbewegungen nicht vom Zeitpunkt abhängt, wie z.B. Personenströme in einer belebten Einkaufspassage zu Geschäftszeiten. In diesen Fällen können die Ergebnisse der Vorsimulationen nach dem besten Datensatz durchsucht werden, ohne dass der korrespondierende Zeitpunkt eine Rolle spielt.

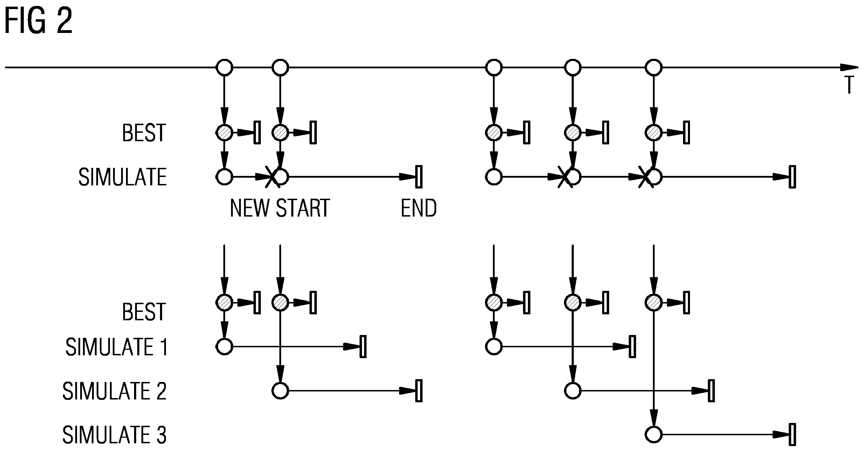

Figur 2 zeigt den Einsatz einer Personenstromsimulation bei einer Echtzeitanwendung. Nach rechts ist der Ablauf der Zeit T aufgetragen. Zu den den Punkten auf der Zeitachse entsprechenden Zeiten stehen jeweils neue Echtzeitdaten, also die aktuellen Personeninformationen zur Verfügung. Ab diesen Zeitpunkten ist es von Interessen, möglichst schnell ein dem aktuellen Szenario entsprechendes Ergebnis einer Personenstromsimulation zur Verfügung zu haben, um in Echtzeit auf von der Simulation prognostizierte Abläufe reagieren zu können. Zu diesen Zeitpunkten wird daher - entsprechend den Zeilen BEST und den hierin eingezeichneten schraffierten Kreisen - der beste Datensatz aus den Vorsimulationen ermittelt. Diese Ermittlung dauert eine kurze Zeit, durch den kleinen nach rechts zeigenden Pfeil symbolisiert. Sobald der beste Datensatz zur Verfügung steht, kann das Ergebnis der Vorsimulation, aus welcher dieser Datensatz stammt, als aktuelles Simulationsergebnis angesehen und ausgewertet werden. Hierbei entspricht der beste Datensatz dem Startzeitpunkt, d.h. dem Zeitpunkt der Erfassung der Personeninformationen.

Erweitern lässt sich das Verfahren nun noch dadurch, dass mit dem Eintreffen neuer Sensordaten zusätzlich eine "echte" Simulation gestartet wird, also eine Simulation neu berechnet wird. Das hat den Vorteil, dass dadurch noch genauere Ergebnisse zu erwarten sind, als dies durch die oben beschriebene Auswahl aus den Vorsimulationen der Fall wäre. Dies ist in der Zeile SIMULATE mit den unausgefüllten Kreisen dargestellt. Der Nachteil dieser neu berechneten Simulationen ist die längere Simulationsdauer, symbolisiert durch die hiervon ausgehenden nach rechts zeigenden Pfeile. Es ist daher sinnvoll, zunächst die Ergebnisse der dem besten Datensatz entsprechenden Vorsimulation zu verwenden und auszuwerten, die dann durch diejenigen der echten Simulation ersetzt werden, sobald diese vorliegen.

Wenn die Sensordaten wiederholt, z.B. in regelmäßigen Abständen oder auch unregelmäßig wie in Figur 2 gezeigt, neu eintreffen, gibt es bei der praktischen Umsetzung dieser Vorgehensweise die folgenden in der Figur 2 dargestellten Alternativen:
Bei der ersten Alternative, entsprechend dem oberen Teil der Figur, wird auf derselben virtuellen Recheneinheit, auch als Container bezeichnet, zum Zeitpunkt NEW START eine neue Simulation gestartet, die die Ergebnisse der vorhergehenden Simulation überschreibt. In der Figur ist der Fall dargestellt, dass diese neue Simulation zum Zeitpunkt END beendet wird, so dass ab diesem Zeitpunkt die Ergebnisse dieser Simulation für die Echtzeitanwendung zur Verfügung stehen.

Bei der zweiten Alternative, entsprechend dem unteren Teil der Figur, kann beim Eintreffen eines neuen Sensordatensatzes jeweils eine neue Simulation auf einer anderen virtuellen Recheneinheit basierend auf den aktuellen Personeninformationen gestartet werden, während die bisherigen Simulationsläufe noch weiterrechnen. Dies ist in den Zeilen SIMULATE 1, SIMULATE 2 und SIMULATE 3 zu sehen; es hat den Vorteil, dass die älteren Läufe bereits weiter in die Zukunft reichen und, sobald ihre Ergebnisse zur Verfügung stehen, eine genauere Prognose ermöglichen als die Vorsimulation des besten Datensatzes. Der Nachteil ist der höhere Aufwand für die gleichzeitig laufenden Container.

Bei beiden Alternativen können Ergebnisse von Simulationen von Personenströmen bereits genutzt werden, sobald Messdaten zur Personenerfassung aus dem zu simulierenden Szenario vorliegen. Von Vorteil hierbei ist dementsprechend, dass für rechenintensive Simulationen von Personenströmen nun nicht mehr die Simulation selbst abgewartet werden muss, sondern für Echtzeitanwendungen ein bester Datensatz aus vorab aufgezeichneten Vorsimulationen ausgewählt wird. Dadurch können bereits relativ gute Simulationsergebnisse annähernd sofort angezeigt werden, während die tatsächliche Simulation im Hintergrund noch berechnet wird. Dies ist insbesondere für interaktive Anwendungen - Stichwort Simulation @ Operation - von Vorteil.

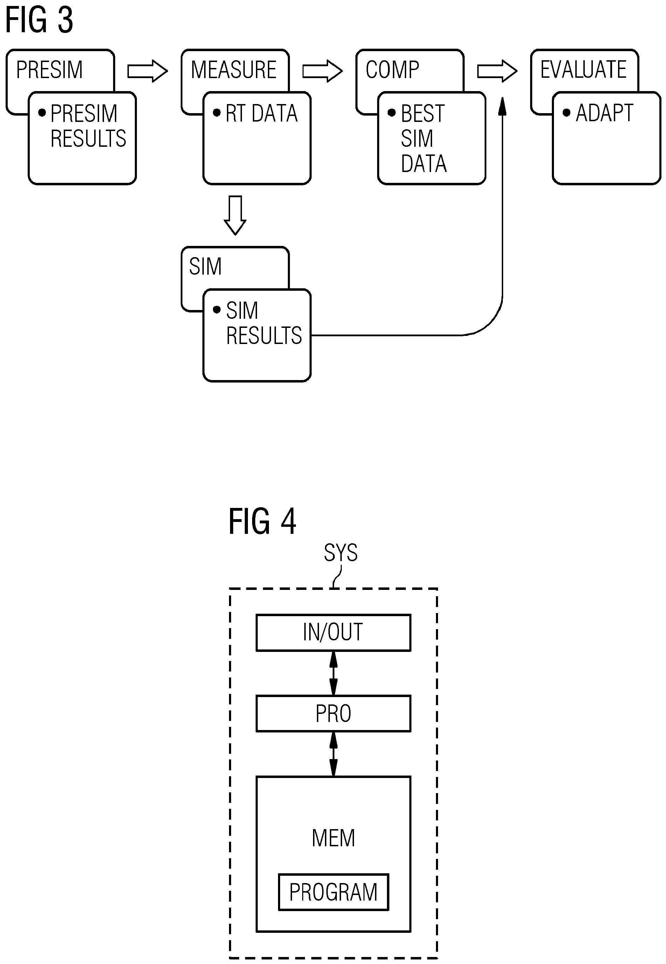

Zusammenfassend zeigt Figur 3 ein Ablaufdiagramm zu dem geschilderten Vorgehen. Im ersten Schritt PRESIM werden die Ergebnisse PRESIM RESULTS mehrerer Vorsimulationen berechnet und dann gespeichert. Bei Bedarf einer Personenstromsimulation in einem realen Szenario werden im Schritt MEASURE Realdaten RT DATA erfasst. Basierend hierauf erfolgt zweierlei: zum einen wird im Schritt COMP der beste Datensatz BEST SIM DATA ermittelt, wodurch diejenigen Ergebnisse PRESIM RESULTS der Vorsimulationen ausgewählt werden, welche dem aktuellen Szenario am besten entsprechen; zum anderen werden im Schritt SIM Ergebnisse SIM RESULTS einer neuen Personenstromsimulation berechnet, wobei hierzu die Realdaten RT DATA in das Personenstromsimulationsmodell eingegeben werden. Basierend zunächst auf den im Schritt COMP ausgewählten Ergebnissen PRESIM RESULTS der Vorsimulation - denn diese stehen schneller zur Verfügung als diejenigen SIM RESULTS der neuen Personenstromsimulation - wird im Schritt EVALUATE analysiert, welche Maßnahmen ADAPT getroffen werden können, um den Personenfluss im betrachteten Gebiet zu verbessern. Sobald die Ergebnisse SIM RESULTS der neuen Personenstromsimulation berechnet sind, können diese verwendet werden, um über geeignete Maßnahmen ADAPT zu entscheiden.

Figur 4 zeigt, wie ein zur Durchführung des erläuterten Verfahrens geeignetes System SYS aufgebaut sein kann. Während die im Folgenden näher erläuterten Bestandteile in der Figur einfach vorhanden sind, ist es auch möglich, dass diese in mehrfacher Ausführung vorhanden sind, z.B. als verteiltes System. Auf diese Weise kann die Funktionalität des Systems SYS auf mehrere, gegebenenfalls hierarchisch miteinander verknüpfte, Systeme aufgeteilt werden.

Das System SYS umfasst eine Recheneinheit bzw. einen Prozessor PRO. Dieser ist verbunden mit einem Speicher MEM, in welchem ein Computerprogramm PROGRAM abgelegt ist. Bei dem Speicher MEM handelt es sich vorzugsweise um ein nicht-flüchtiges computerlesbares Datenspeichermedium. Die Speicherung kann auf jegliche Weise erfolgen, welche geeignet ist, die Auslesbarkeit durch eine Recheneinheit zu gewährleisten, wie durch magnetische Speicherung, z.B. mittels Diskette, optische Speicherung, z.B. mittels CD, magneto-optische Speicherung, ROM (Read Only Memory) Speicherung, RAM (Random Access Memory) Speicherung, EPROM (Erasable Programmable Read-Only Memory), EEPROM (Electrically Erasable Programmable Read-Only Memory), Flash-Memory.

Durch Ausführen der Instruktionen des Programms PROGRAM in dem Prozessor PRO werden die Schritte der oben erläuterten Vorgehensweise durchgeführt. Insbesondere können die Vorsimulationen berechnet und ihre Ergebnisse im Speicher MEM abgelegt werden; auch der Vergleich mit den erfassten Personeninformationen zur Ermittlung des besten Datensatzes und die Berechnung von neuen Simulationen basierend auf Realdaten kann hier erfolgen. Hierzu ist der Prozessor PRO mit einer Ein- und Ausgabeeinheit IN/OUT verbunden, über welche Informationen zwischen dem System SYS und anderen Komponenten und/oder einem Nutzer ausgetauscht werden können. Insbesondere der Empfang der Personeninformationen ist über diese Schnittstelle möglich; ferner können auch Ergebnisse über diese Schnittstelle ausgegeben werden. Diese Schnittstelle kann hierbei auf geeignete Weise ausgestaltet sein, z.B. über Funk oder über Kabel, und die Kommunikation kann über geeignete Standards erfolgen.

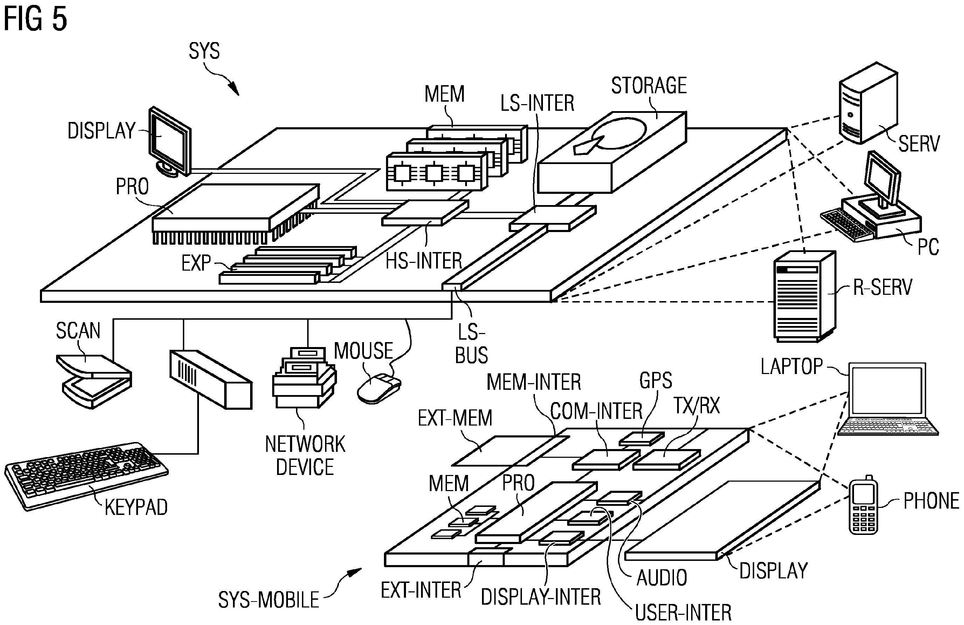

Figur 5 zeigt beispielhaft, wie das System der Figur 4 ausgestaltet sein kann: dies kann ein generischer Computer SYS oder ein mobiler generischer Computer SYS-MOBILE sein. Hierbei repräsentiert der generischer Computer SYS verschiedene Arten digitaler Computergeräte, so wie z.B. Desktopcomputer, Workstations, Server, Blade Server, Mainframes, oder andere geeignete Geräte. Der mobile generische Computer SYS-MOBILE steht entsprechend für verschiedene Arten mobiler digitaler Computergeräte, so wie z.B. Laptops, PDAs, Mobiltelefone oder Smart Phones, oder andere geeignete Geräte. Wenn anhand von Figur 5 konkret und detailliert verwendbare Komponenten aufgezeigt und erläutert werden, ist dies beispielhaft zu verstehen; die Realisierung der Erfindung ist nicht auf diese Komponenten beschränkt.

Der Computer SYS umfasst einen Prozessor PRO, einen Speicher MEM, und dazwischen ein Hochgeschwindigkeits-Interface HS-INTER. Ferner sind Hochgeschwindigkeits-Expansion Ports EXP und ein Low-speed-Interface LS-INTER an das Hochgeschwindigkeits-Interface HS-INTER angeschlossen. An das Low-speed-Interface LS-INTER sind das Speichergerät STORAGE und der Low-speed Bus LS-BUS angeschlossen. Die Komponenten PRO, MEM, STORAGE, HS-INTER, EXP, LS-INTER sind über geeignete Verbindungen/Busse verbunden, und können auf einem gemeinsamen Motherboard montiert sein.

Während in Figur 5 die Komponenten des Computers SYS in einfacher Ausführung dargestellt sind, ist es auch möglich, manche oder alle dieser Komponenten mehrfach vorzusehen. Auch kann der Computer SYS mehrere miteinander verbundene Computer umfassen, welche sich gegebenenfalls an verschiedenen Orten befinden.

Der Prozessor PRO kann Instruktionen verarbeiten, die im Computer SYS ausgeführt werden sollen, wobei die Instruktionen insbesondere im Speicher MEM oder im Speichergerät STORAGE gespeichert sein können. Informationen, insbesondere Ergebnisse der Verarbeitung im Prozessor PRO, können mittels einer GUI auf einer an das Hochgeschwindigkeits-Interface HS-INTER angeschlossene Anzeige wie dem Bildschirm DISPLAY grafisch ausgegeben werden.

Der Speicher MEM dient der Speicherung von Informationen innerhalb des Computers SYS. Hierbei kann es sich um einen flüchtigen Speicher oder einen nicht-flüchtigen Speicher handeln. Er kann mehrere Speicherzellen umfassen. Bei dem Speichergerät STORAGE handelt es sich vorzugsweise um ein Massenspeichergerät für ein computerlesbares Medium. Hierzu kann es z.B. ein Diskettenlaufwerk, eine Festplatte, ein Laufwerk für optische Speicherplatten, ein Bandgerät, ein Flash Memory-Speichergerät, oder auch eine Reihe von Geräten, z.B. in einer Storage Area Networks Konfiguration, umfassen.

Das Hochgeschwindigkeits-Interface HS-INTER ist zuständig für Bandbreiten-intensive Vorgänge innerhalb des Computers SYS, während das Low-speed-Interface LS-INTER für solche mit geringerem Bandbreitenbedarf verwendet wird. Hierzu ist das Hochgeschwindigkeits-Interface HS-INTER verbunden mit dem Speicher MEM, dem Bildschirm DISPLAY, gegebenenfalls über einen Grafikprozessor, den Hochgeschwindigkeits-Expansion Ports EXP, welche diverse Erweiterungskarten aufnehmen können. An das Low-speed-Interface LS-INTER angebunden sind das Speichergerät STORAGE und der Low-speed Bus LS-BUS, an welchem sich Low-Speed-Expansion Ports befinden können. Letztere können verschiedene Kommunikationsanschlüsse aufweisen, z.B. USB, Bluetooth, Ethernet, drahtloses Ethernet. An diese können diverse Ein- und/oder Ausgabevorrichtungen angeschlossen sein, z.B. eine Tastatur KEYPAD, eine Maus MOUSE, ein Scanner SCAN, ein Netzwerkgerät NETWORK DEVICE wie ein Switch oder ein Router. Diese Aufgabenverteilung zwischen den beiden Interfaces HS-INTER und LS-INTER ist beispielhaft und kann auch anders organisiert sein.

Der Computer SYS kann auf verschiedene Arten implementiert sein, wie am rechten Rand der Figur zu sehen ist. Z.B. kann er implementiert sein als ein Personal Computer PC, als ein Standard-Server SERV, oder auch als eine Gruppe solcher Sever wie z.B. eine Serverfarm, oder als ein Rack-Server-System R-SERV oder Bestanteil eines solchen Systems.

Der mobile Computer SYS-MOBILE umfasst einen Prozessor PRO, einen Speicher MEM, eine Ein- und Ausgabevorrichtung DISPLAY, ein Kommunikations-Interface COM-INTER, einen Transceiver TX/RX. Die Komponenten PRO, MEM, COM-INTER, TX/RX sind über geeignete Verbindungen/Busse verbunden, und können auf einem gemeinsamen Motherboard oder in anderer geeigneter Weise montiert sein. Ferner kann eine weitere Speichereinrichtung, wie z.B. ein Mikrodrive o.ä., vorgesehen sein, um weitere Speicherungsmöglichkeit zu schaffen.

Der Prozessor PRO kann Instruktionen innerhalb des mobilen Computers SYS-MOBILE ausführen, insbesondere solche, die im Speicher MEM abgelegt sind. Er kann als Chip oder Chipset implementiert sein, welcher eine oder mehrere analoge oder digitale Prozesseinheiten enthält. Zuständig kann der Prozessor PRO u.a. sein für die Koordination der anderen Komponenten des mobilen Computers SYS-MOBILE, so z.B. für die Steuerung der Benutzerschnittstelle(n), für Applikationen, welche auf dem mobilen Computers SYS-MOBILE laufen, und für die drahtlose Kommunikation des mobilen Computers SYS-MOBILE. Zwischen dem Nutzer des mobilen Computers SYS-MOBILE und dem Prozessor PRO findet eine Informationsübertragung statt über das Nutzer-Interface USER-INTER, beispielsweise über Sprach-Ein/Ausgabe, sowie über das Display-Interface DISPLAY-INTER, beispielsweise über Text- Ein/Ausgabe. Die Ein- und Ausgabevorrichtung DISPLAY kann z.B. auf der TFT LCD (Thin-Film-Transistor Liquid Crystal Display) oder der OLED (Organic Light Emitting Diode) Technologie basieren.

Ferner ist ein an den Prozessor PRO angebundenes externes Interface EXT-INT vorgesehen, über welches eine Nahfeldkommunikation des mobilen Computers SYS-MOBILE mit anderen Geräten möglich ist. Über das externe Interface EXT-INT kann drahtgebunden und/oder über Funk kommuniziert werden.

Der Speicher MEM dient der Speicherung von Informationen innerhalb des mobilen Computers SYS-MOBILE und kann hierzu z.B. als flüchtiger oder nicht-flüchtiger Speicher umfassend eine oder mehrere Speichereinheiten implementiert sein. Zusätzlich kann ein Erweiterungsspeicher EXT-MEM vorgesehen sein, welches mit dem mobilen Computer SYS-MOBILE über das Erweiterungs-Interface MEM-INTER verbunden ist, z.B. eine Schnittstelle für ein SIMM (Single In Line Memory Module) oder ein SIM (Subscriber Identity Module). Der Erweiterungsspeicher EXT-MEM bietet zusätzliche Speicherkapazität für den mobilen Computer SYS-MOBILE und kann auch diverse Applikationen speichern. Z.B. kann der Erweiterungsspeicher EXT-MEM als Sicherheitsmodul für den mobilen Computer SYS-MOBILE dienen, indem Identifikationsinformationen dort abgelegt werden.

Der mobile Computer SYS-MOBILE kann drahtlos über den Transceiver TX/RX kommunizieren, welcher hierzu über Mittel zur digitalen Signalverarbeitung verfügt. Das Kommunikations-Interface COM-INTER ermöglicht die Kommunikation über geeignete Protokolle, wie z.B. GSM, SMS, MMS, CDMA, TDMA, PDC, WCDMA, CDMA2000, GPRS, EDGE, UMTS, LTE, sowie Kommunikationsprotokolle der 5ten oder höherer Generationen. Zusätzlich zum hierfür verwendeten Transceiver TX/RX kann ein nicht dargestellter Transceiver für Nahfeldkommunikation wie z.B. Bluetooth, WiFi o.ä. vorgesehen sein. Schließlich kann auch ein GPS-Modul GPS vorgesehen sein, um ortsbezogene Dienste verwenden zu können. Mittels des Audio-Codec AUDIO können empfangene Audioinformationen, welche insbesondere Instruktionen eines Nutzers umfassen können, in vom mobilen Computer SYS-MOBILE verarbeitbare digitale Informationen umgewandelt werden; entsprechend können unter Verwendung des Audio-Codec AUDIO vom Nutzer erfassbare Klanginformationen generiert werden.

Wie auf der rechten Seite der Figur zu sehen, ist der mobile Computer SYS-MOBILE vorzugsweise als Smartphone PHONE oder Laptop LAPTOP implementiert.

Die Interaktion zwischen dem Nutzer und dem Computer SYS oder dem mobilen Computer SYS-MOBILE kann auf verschiedenste Weise erfolgen und ist nicht auf die konkrete Darstellung der Figur 5 beschränkt. Jegliche sensorische Informationsübermittlung (sichtbar, hörbar, taktil wahrnehmbar) ist möglich.

Während die Komponenten des Computers SYS und des mobilen Computers SYS-MOBILE getrennt beschrieben wurden, ist es auch möglich, einen Computer einzusetzen, welcher sowohl Komponenten des Computers SYS, als auch des mobilen Computers SYS-MOBILE umfasst.

Das in Figur 4 gezeigte Computerprogramm PROGRAM kann in jedem der Speicher MEM, STORAGE, EXT-MEM der Figur 5 abgelegt sein, auch verteilt auf mehrere Speicher. Ferner kann eine Speicherung alternativ oder zusätzlich auch Cloud-basiert erfolgen.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zur Simulation von Personenströmen in einem Gebiet (AREA), bei dem
Ergebnisse mehrerer für das Gebiet (AREA) durchgeführter Personenstromsimulationen vorliegen, wobei jedes Ergebnis eine Verteilung von Personen innerhalb des Gebietes (AREA) für mehrere Zeitpunkte angibt,
für eine Echtzeitanwendung in zumindest einem Teil (MK) des Gebietes (AREA) mittels mindestens eines Sensors Personeninformationen erfasst werden,
unter Verwendung der Personeninformationen eines der vorliegenden Ergebnisse als am besten den erfassten Personeninformationen entsprechend ermittelt wird,
dieses ermittelte Ergebnis als Simulationsergebnis für das Gebiet (AREA) verwendet wird.

2. Verfahren nach Anspruch 1, bei dem
bei den durchgeführten Personenstromsimulationen verschiedene Anzahlen an in dem Gebiet (AREA) befindlichen Personen zugrunde gelegt wurden.

3. Verfahren nach Anspruch 1 oder 2, bei dem die Personeninformationen umfassen:
eine Anzahl von Personen in dem zumindest einen Teil (MK) des Gebietes (AREA), und/oder
Ortsangaben von Personen in dem zumindest einen Teil (MK) des Gebietes (AREA), und/oder
Bewegungsgeschwindigkeiten von Personen in dem zumindest einen Teil (MK) des Gebietes (AREA), und/oder
Bewegungsrichtungen von Personen in dem zumindest einen Teil (MK) des Gebietes (AREA).

4. Verfahren nach einem der Ansprüche 1 bis 3, bei dem die Personeninformationen mittels mindestens einer Kamera und/oder mindestens einer Smartphone Applikation und/oder mindestens einer Personenzähleinrichtung erfasst werden.

5. Verfahren nach einem der Ansprüche 1 bis 4, bei dem zur Ermittlung des am besten entsprechenden Ergebnisses ein Distanzmaß zwischen Datensätzen aus den Ergebnissen und den Personeninformationen berechnet werden.

6. Verfahren nach Anspruch 5, bei dem
jeder Datensatz das Ergebnis einer der durchgeführten Personenstromsimulationen für einen bestimmten Zeitpunkt ist.

7. Verfahren nach einem der Ansprüche 1 bis 6, bei dem unter Verwendung der Personeninformationen eines der vorliegenden Ergebnisse und ein Zeitpunkt ermittelt wird,
dieses ermittelte Ergebnis derart als Simulationsergebnis für das Gebiet (AREA) verwendet wird, dass der ermittelte Zeitpunkt der Startzeitunkt der Simulation und der der Erfassung der Personeninformationen entsprechende Zeitpunkt ist.

8. Verfahren nach einem der Ansprüche 1 bis 7, bei dem unter Verwendung der Personeninformationen eine weitere Personenstromsimulation gestartet wird (SIMULATE), und nach Beendigung dieser Personenstromsimulationsberechnung das hierzu gehörige Ergebnis anstelle des zuvor ermittelten Ergebnisses als Simulationsergebnis für das Gebiet (AREA) verwendet wird.

9. Verfahren nach einem der Ansprüche 1 bis 8, bei dem zu einem späteren Zeitpunkt erneut Personeninformationen erfasst werden,
unter Verwendung der neuen Personeninformationen eines der vorliegenden Ergebnisse als am besten den neuen Personeninformationen entsprechend ermittelt wird, dieses ermittelte Ergebnis als Simulationsergebnis für das Gebiet (AREA) verwendet wird, und
unter Verwendung der neuen Personeninformationen eine weitere Personenstromsimulation gestartet wird (SIMULATE) .

10. Verfahren nach einem der Ansprüche 1 bis 9, bei dem bei der Echtzeitanwendung basierend auf der Verwendung als Simulationsergebnis für das Gebiet (AREA) eine Maßnahme zur Lenkung von Personenströmen in dem Gebiet (AREA) durchgeführt wird.

11. Vorrichtung oder System zur Datenverarbeitung (SYS), umfassend Mittel zur Ausführung des Verfahrens nach einem der Ansprüche 1 bis 10.

12. Computerprogramm (PROGRAM), umfassend Befehle, die bei der Ausführung des Programms durch einen Computer diesen veranlassen, die Schritte des Verfahrens nach einem der Ansprüche 1 bis 10 auszuführen.

13. Computerlesbares Speichermedium (MEM) mit einem Computerprogramm (PROGRAM) nach Anspruch 12.

14. Übertragungssignal, das das Computerprogramm (PROGRAM) nach Anspruch 12 überträgt.
